# EUROPÄISCHE PATENTSCHRIFT

(11) **EP 4 438 351 B1**
(45) Veröffentlichungstag und Bekanntmachung des Hinweises auf die Patenterteilung: **04.03.2026**
(21) Anmeldenummer: 24165964.8
(22) Anmeldetag: 25.03.2024
(51) Int. Cl.: F04B 17/03, F04B 53/16, F04C 14/02, H02K 11/33, B60G 17/015, B60G 17/08, F04B 49/06, F04B 53/22, H02K 5/04, F04C 2/10

(54) **ELEKTRONIKBAUKASTEN FÜR EINE MIT GEMEINSAMER STEUERVORRICHTUNG AUSGESTATTETE MOTOR-PUMPE EINHEIT EINES ACHSSATZES**
ELECTRONIC CONSTRUCTION KIT FOR A WITH A COMMON CONTROL UNIT PROVIDED MOTOR-PUMP UNIT OF AN AXLE SET
MODULE ÉLECTRONIQUE POUR UNE UNITÉ MOTEUR-POMPE D'UN KIT D'ESSIEU POURVUE D'UNE UNITÉ DE CONTRÔLE COMMUNE

(30) Priorität: 29.03.2023 DE 102023108059
(43) Veröffentlichungstag der Anmeldung: 02.10.2024
(73) Patentinhaber: RAPA Automotive GmbH & Co. KG, 95100 Selb (DE)
(72) Erfinder: Rubitzko, Tim, 95100 Selb (DE); Kemnitz, Rocco, 95100 Selb (DE)
(74) Vertreter: Vierheilig, Achim

(56) Entgegenhaltungen:
- DE-A1- 102018 200 480
- DE-A1- 102019 118 384
- DE-A1- 102021 105 032
- DE-T5- 112020 003 914
- US-A1- 2016 311 462

## Beschreibung

### GEBIET DER ERFINDUNG

Die vorliegende Erfindung betrifft eine Motor-Pumpe-Einheit, einen Motor-Pumpe-Einheit-Achssatz und einen Bausatz dafür, sowie eine Fahrwerkachse und ein Fahrwerksystem.

### HINTERGRUND DER ERFINDUNG

Aktive Fahrwerksysteme sind beispielsweise aus DE 39 02 743 C1 oder DE 2 020 292 A1 bekannt. Dabei wird beispielsweise zwischen vollaktiven und semiaktiven Fahrwerksystemen unterschieden, in denen die Aufhängung entweder für jedes Rad einzeln oder achsweise aktiv angesteuert werden kann. Ein aktives Fahrwerk weist hydraulisch steuerbare bzw. angesteuerte Stoßdämpfer auf, bei denen die beiden Zylinder- bzw. Dämpferkammern des Arbeitszylinders eines Stoßdämpfers nicht lediglich über ein oder mehrere, gegebenenfalls steuerbare Dämpfungs- bzw. Drosselventile (Dämpferverstellventile) miteinander verbunden sind, sondern bei denen beispielsweise der Füllzustand der Zylinderkammern aktiv gesteuert wird und entsprechend bedarfsweise hydraulische Kräfte in das Fahrwerk eingeleitet werden. Die beiden Zylinderkammern eines Stoßdämpfers können beispielsweise parallel oder alternativ zu den Dämpfungs- bzw. Drosselventilen über eine hydraulische Pumpe verbunden sein, die von einem Elektromotor angetrieben werden kann und diesen gegebenenfalls auch als elektrischen Generator bzw. Elektromotorgenerator antreiben kann (Rekuperationsbetrieb). Zusätzlich oder alternativ können mit Hilfe der Pumpe gegebenenfalls auch anderweitige Einstellungen in dem Stoßdämpfer vorgenommen werden.

Durch das Pumpen von Hydraulikfluid kann beispielsweise Nick- und/oder Wankbewegungen des Fahrzeugs entgegengewirkt werden. Umgekehrt kann eine solche Anordnung aus Stoßdämpfer, hydraulischer Pumpe und Elektromotor auch durch Rekuperation gewonnene elektrische Energie in das Bordnetz des Fahrzeugs zurückspeisen. Dabei können auch unterschiedliche Dämpfungsverhalten eingestellt werden, beispielsweise "weich" oder "hart" oder auch abhängig vom Fahrverhalten und/oder der Untergrundbeschaffenheit.

Generell werden somit die hydraulische Pumpe und der Elektromotorgenerator bzw. Elektromotor im aktiven Fahrwerk zum Ein- und/oder Ausleiten hydraulischer Energie aus dem (Fahrwerk-)System verwendet. Dabei bilden die Pumpe und der Elektromotor in der Regel eine gemeinsame, kompakte Baueinheit, die im Folgenden als Motor-Pumpe-Gruppe bezeichnet wird. Ist an der Motor-Pumpe-Gruppe weiterhin eine Antriebs- und/oder Ansteuereinheit (Elektronikeinheit, ECU, electric control unit) fest angeordnet, so wird dies auch als Motor-Pumpe-Einheit (MPE) bezeichnet. Derartige Motor-Pumpe-Gruppen bzw. Motor-Pumpe-Einheiten wandeln somit elektrische in hydraulische Energie und gegebenenfalls auch umgekehrt.

Dabei sind aus den Druckschriften DE 11 2020 003914 T5, US 2016/311462 A1, DE 10 2019 118384 A1, DE 10 2021 105032 A1, DE 10 2018 200480 A1 verschiedene Motor-Pumpe-Gruppen bzw. -Einheiten und Elektromotoren dafür bekannt.

Bis vor wenigen Jahren war durchweg nur ein 12V-Bordnetz in Kraftfahrzeugen zu finden. Inzwischen existieren, getrieben durch Hybrid- und reine Elektrofahrzeuge, in vielen Kraftfahrzeugen zwei oder mehr (Teil-)Bordnetze mit verschiedenen elektrischen Spannungslagen. Dabei ist in der Regel nach wie vor ein 12V-Bordnetz vorhanden und es existiert daneben zumindest ein weiteres Bordnetz bzw. Leistungs-Bordnetz mit einer höheren Spannungslage, beispielsweise 24V, 48V, 400V oder 800V, über welches dann leistungsstarke Verbraucher versorgt werden.

### ZUSAMMENFASSUNG DER ERFINDUNG

Aufgabe der Erfindung ist es, eine Motor-Pumpe-Einheit anzugeben, die aufwandsarm an verschiedene Einbausituationen angepasst werden kann. Es ist weiterhin Aufgabe der Erfindung einen entsprechenden Bausatz dafür, sowie eine Fahrwerkachse und ein Fahrwerksystem mit einer derartigen Motor-Pumpe-Einheit anzugeben.

Die Aufgabe wird gelöst durch den Gegenstand des unabhängigen Anspruchs. Bevorzugte Ausgestaltungen und Weiterbildungen sind in den davon abhängigen Ansprüchen angegeben.

Die erfindungsgemäße Motor-Pumpe-Einheit (im Folgenden auch als MPE bezeichnet) ist eine Vorrichtung zum Bereitstellen bzw. zum Ein- und/oder Ausleiten von hydraulischer Energie, insbesondere in und/oder aus einem Fahrwerksystem eines Fahrzeugs. Die erfindungsgemäße MPE umfasst:
- eine Motor-Pumpe-Gruppe, mit einer hydraulischen Pumpe und einem Elektromotor bzw. Elektromotorgenerator zum Antreiben der hydraulischen Pumpe, und
- eine Elektronikeinheit zur Ansteuerung bzw. zum Betrieb der Motor-Pumpe-Gruppe, das heißt zur Abgabe bzw. zum Austausch von Steuersignalen und/oder zur elektrischen Leistungsversorgung bzw. zum elektrischen Antrieb des Elektromotors.

Die Elektronikeinheit weist erfindungsgemäß zwei Leiterplatinen auf, eine Leistungsplatine mit Leistungselektronik für den Elektromotor und eine Signalplatine.

Die Leistungsplatine weist die, bevorzugt sämtliche für die elektrische Leistungszufuhr an den Elektromotor notwendigen Bauteile und/oder sämtliche Leistungselektronik-Bauteile der Elektronikeinheit auf, so dass im einfachsten Fall in der Elektronikeinheit bzw. in der MPE Leistungselektronik-Bauteile ausschließlich auf der Leistungsplatine angeordnet sind. Die Elektronikeinheit bzw. die Leistungsplatine liefert direkt und unmittelbar die, bevorzugt sämtliche Spulenströme bzw. Motorphasenströme für den Elektromotor der Motor-Pumpe-Gruppe. Im einfachsten Fall ist ausschließlich die Elektronikeinheit und/oder in der Elektronikeinheit ausschließlich die Leistungsplatine mit dem Elektromotor bzw. mit den Magnetspulen des Elektromotors unmittelbar elektrisch verbunden, bevorzugt über genau oder zumindest drei (einadrige) Motorphasenleitungen bzw. Magnetspulenzuleitungen.

Dagegen weist die Signalplatine bevorzugt keine Leistungselektronik-Bauteile auf.

Weiterhin ist die Leistungsplatine der Elektronikeinheit auf eine vorbestimmte Spannungslage (eines (Leistungs-)Bordnetzes eines Fahrzeugs) ausgelegt. Entsprechend muss aufgrund der Anordnung der Leistungselektronik ausschließlich auf der Leistungsplatine, zur Anpassung der MPE an eine anderweitige Einbausituation mit anderweitiger Spannungslage (beispielsweise in einem anderweitigen (Leistungs-)Bordnetz), in der Elektronikeinheit lediglich die Leistungsplatine, nicht aber die Signalplatine angepasst und/oder ausgetauscht werden. Dies verringert den Anpassungsaufwand für die MPE und erhöht die Anzahl der Gleichteile in der Elektronikeinheit und/oder der MPE (Baukasten-Prinzip) und verringert somit die Bauteilkosten.

Im einfachsten Fall handelt es sich bei der Leistungsplatine und der Signalplatine um zwei verschiedene, voneinander (baulich) getrennte und/oder beabstandete Leiterplatinen. Prinzipiell kann es sich bei Leistungsplatine und Signalplatine jedoch auch um zwei verschiedene, voneinander abgegrenzte Bereiche auf einer einzigen bzw. gemeinsamen Leiterplatine handeln, wobei Signalplatine und Leistungsplatine bevorzugt jeweils genau einen zusammenhängenden Bereich auf der gemeinsamen Leiterplatine bilden und/oder die gemeinsame Leiterplatine in genau zwei jeweils zusammenhängende Bereiche teilen, beispielsweise hälftig.

Erfindungsgemäß weisen Leistungsplatine und Signalplatine (im Betrieb) unterschiedliche Spannungslagen auf, das heißt Leistungsplatine und Signalplatine sind für unterschiedliche Spannungslagen eingerichtet. Insbesondere weist die Leistungsplatine eine Hochvolt-Spannungslage und die Signalplatine eine Niedervolt-Spannungslage auf, die kleiner als die Hochvolt-Spannungslage ist.

Die Spannungslage ist die höchste auf der Leiterplatine im Betrieb auftretende Spannung und/oder die (Maximal-)Spannung, für die die Leiterplatine (bzw. das Bauteil) eingerichtet ist. Die Leiterplatine ist daher hinsichtlich Bauart, Spannungsfestigkeit und/der Stromtragfähigkeit für eine Spannung von zumindest oder genau der Spannungslage eingerichtet. Die Spannungslage ist im einfachsten Fall die Nennspannung, das heißt die Spannung, die bei bestimmungsgemäßem Gebrauch vorgesehen ist.

Bevorzugt beträgt die die Hochvolt-Spannungslage 48V, 400V oder 800V und/oder die Niedervolt-Spannungslage beträgt 5V, 12V oder 24V.

Bevorzugt umfasst die Leistungselektronik der Leistungsplatine Bauteile wie Leistungs-(Schalt-)Transistoren und/oder eine B6-Brücke und bevorzugt einen Gatetreiber dafür und/oder einen Zwischenkreis-Kondensator und/oder eine EMV-Filterung, umfassend beispielsweise eine Gleichtaktdrossel und/oder Y-Kondensatoren, und/oder Hochvolt-Strom-Mess-Shunts und/oder einen Spannungswandler bzw. Trafo von der Hochvolt- zur Niedervolt-Spannung bzw. - Spannungslage und/oder eine (Niedervolt-)Versorgungsspannungs-Schnittstelle zur Spannungsversorgung der Signalplatine durch die Leistungsplatine, das heißt zum Erzeugen bzw. Bereitstellen der Niedervolt-Spannung für die Signalplatine, wobei die Versorgungsspannungs-Schnittstelle bevorzugt in den (nachfolgend beschriebenen) Leistungsplatinen-Stecker integriert bzw. Teil davon ist. Weiterhin weist die Leistungsplatine eine (Hochvolt-)Versorgungsspannungs-Schnittstelle zur Versorgung der Leistungsplatine auf oder ist mit einer (Hochvolt-)Versorgungsspannungs-Schnittstelle unmittelbar verbunden und/oder als Empfänger einer (Hochvolt-)Versorgungsspannung eingerichtet. Dabei steuert beispielsweise eine B6-Brücke (bzw. deren Schalter) die (drei) Phasen bzw. Spulenwicklungen des Elektromotors unmittelbar an. Die Bauteile und/oder Leistungs-Transistoren der Leistungselektronik bestehen aus oder umfassen integrierte (Elektronik- bzw. Halbleiter-)Bauteile, insbesondere
- Leistungs-MOSFETs (power MOSFET, power metal oxide semiconductor field-effect transistor; insbesondere für eine Spannungslage von 48V) und/oder
- Bipolar-Transistoren mit isolierter Gate-Elektrode (insulated-gate bipolar transistor, IGBT bzw. Si-IGBT; insbesondere für eine Spannungslage von 400V oder 800V) und/oder
- SiC-MOSFETs (Siliciumcarbid, SiC; insbesondere für eine Spannungslage von 400V oder 800V).

Dagegen umfasst die Signalplatine als Bauteil bevorzugt zumindest einen Mikroprozessor und/oder ein FPGA (Field Programmable Gate Array) und/oder eine zentrale Signalverarbeitungseinheit (central processing unit, CPU), die bevorzugt zur (Logik- bzw. Signal-)Steuerung zumindest oder genau der gesamten MPE eingerichtet ist. Weiterhin weist die Signalplatine bevorzugt eine Busschnittstelle auf oder ist mit einer Busschnittstelle der Elektronikeinheit bzw. der MPE unmittelbar verbunden und/oder als Teilnehmer für einen Bus eingerichtet, wobei der Bus besonders bevorzugt ein CAN-Bus, ein CAN-FD-Bus oder ein Flexray-Bus ist. Des Weiteren kann die Signalplatine eine Versorgungsspannungs-Schnittstelle zur Spannungsversorgung der Signalplatine durch die Leistungsplatine, das heißt zum Empfangen einer (Niedervolt-)Versorgungsspannung von der Leistungsplatine (bevorzugt zusätzlich zu einer Niedervolt-Spannungsversorgung über die Busschnittstelle) aufweisen, wobei die Versorgungsspannungs-Schnittstelle bevorzugt in den (nachfolgend beschriebenen) Signalplatinen-Stecker integriert bzw. Teil davon ist und/oder von der Busschnittstelle getrennt ist, beispielsweise ein zu der Busschnittstelle separates Bauteil bildet.

Dabei ist es von Vorteil wenn die Versorgungsspannungs-Schnittstelle und die Busschnittstelle auf der Signalplatine galvanisch voneinander (vollständig) getrennt sind (galvanische Trennung). Dadurch wird auch wenn im Fehlerfall von der Niedervolt-Spannungsversorgung der Leistungsplatine unbeabsichtigt Hochvolt-Spannung auf die Signalplatine geleitet wird, ein Weiterleiten dieser unbeabsichtigt an der Versorgungsspannungs-Schnittstelle der Signalplatine anliegenden Hochvolt-Spannung auf die Busschnittstelle der Signalplatine und somit in das Bussystem verhindert. Im einfachsten Fall weist die Signalplatine genau oder zumindest zwei galvanisch voneinander (vollständig) getrennte Bereiche auf, von denen ein erster Teilbereich genau oder zumindest die Busschnittstelle und ein zweiter Teilbereich genau oder zumindest die Versorgungsspannungs-Schnittstelle umfasst. Als galvanische Trennelemente werden bevorzugt kapazitive und/oder (elektro-)optische Koppler verwendet. Die zentrale Signalverarbeitungseinheit (bzw. der Mikroprozessor oder das FPGA) ist bevorzugt im zweiten Teilbereich angeordnet und somit galvanisch von der Busschnittstelle getrennt. Alternativ kann die zentrale Signalverarbeitungseinheit (bzw. der Mikroprozessor oder das FPGA) auch im ersten Teilbereich angeordnet sein und ist somit galvanisch von der Versorgungsspannungs-Schnittstelle getrennt.

In einer bevorzugten Ausgestaltung sind die beiden Leiterplatinen der Elektronikeinheit über ein Stecksystem miteinander mechanisch fest und/oder elektrisch verbunden. Bevorzugt sind Leistungsplatine und Signalplatine miteinander elektrisch ausschließlich über das Stecksystem verbunden. Dabei umfasst die Elektronikeinheit zwei korrespondierende (mehrpolige) (Leiterplatinen-)Stecker, von denen ein erster Stecker (Leistungsplatinen-Stecker) auf der Leistungsplatine (starr bzw. fest) befestigt und/oder verlötet ist und ein zweiter Stecker (Signalplatinen-Stecker) auf der Signalplatine (starr bzw. fest) befestigt und/oder verlötet ist. In der (betriebsbereiten) Elektronikeinheit sind dann Leistungsplatine und Signalplatine über die beiden korrespondierenden Stecker zu einem Stapel bzw. Stack verbunden und entsprechend durch das Stecksystem bzw. die beiden ineinander eingreifenden Leiterplatinen-Stecker beabstandet. Ein derartiges Stecksystem vereinfacht die Bereitstellung der Elektronikeinheit und/oder den Austausch bzw. den Einbau der Leistungsplatine.

Bevorzugt sind die beiden Leiterplatinen (Leistungsplatine und Signalplatine) zueinander parallel angeordnet und/oder sie überlappen sich (teilweise) und/oder weisen identische Abmessungen auf und/oder sind vollständig kongruent zueinander ausgebildet und/oder angeordnet. Bevorzugt sind (sämtliche) Leistungs-Schalttransistoren der Leistungsplatine auf der von der Signalplatine abgewandten Seite der Leistungsplatine angeordnet, was deren Wärmeabfuhr begünstigt.

In einer weiteren bevorzugten Ausgestaltung ist die Elektronikeinheit und/oder die Signalplatine zur Ansteuerung bzw. zum Betrieb, das heißt zur Abgabe bzw. zum Austausch von elektrischen Steuersignalen und/oder zur elektrischen Leistungsversorgung bzw. zum elektrischen Antrieb von genau oder zumindest einer (zu der MPE) externen Vorrichtung eingerichtet, insbesondere zur Ansteuerung eines oder mehrerer Dämpferverstellventile. Dies gestattet es die Steuerlogik bzw. die Steuerabläufe für die zumindest eine externe Vorrichtung in die (ohnehin vorhandene) Elektronikeinheit bzw. auf die Signalplatine der Elektronikeinheit der MPE zu verlagern und/oder beispielsweise die Ansteuersignale für die externe Vorrichtung in der Elektronikeinheit bzw. der Signalplatine zu erzeugen. Dadurch kann ein sonst notwendiges spezielles bzw. dediziertes Steuergerät für die externe Vorrichtung eingespart und somit die Gesamtanzahl der Steuergeräte im System, insbesondere im Fahrwerksystem, reduziert werden. Zudem kann damit beispielsweise von einem übergeordneten Steuergerät über die Busschnittstelle der MPE zugleich die externe Vorrichtung gesteuert werden, was auch den Verkabelungsaufwand reduziert.

Bevorzugt ist die Elektronikeinheit und/oder die Signalplatine als Kraftregler für genau oder zumindest einen Stoßdämpfer ausgebildet. Dabei umfasst ein Stoßdämpfer genau oder zumindest ein elektrisch ansteuerbares bzw. verstellbares Dämpferverstellventil (das eine oben beschriebene externe Vorrichtung darstellt). Die Elektronikeinheit und/oder die Signalplatine der MPE kombiniert als Kraftregler die hydraulische Ansteuerung des Stoßdämpfers über die Pumpe und die elektrische Ansteuerung des Dämpferstellventils. Die Elektronikeinheit bzw. die Signalplatine ist somit dazu eingerichtet, das Zusammenspiel von Pumpe bzw. der Motor-Pumpe-Gruppe und dem Dämpferstellventil zu regeln. Ein übergeordnetes Steuergerät bzw. Fahrwerksteuergerät muss im einfachsten Fall lediglich eine gewünschte Dämpferkraft (über die Busschnittstelle) der Elektronikeinheit bzw. der Signalplatine vorgeben und/oder ein externer Kraftregler in Form eines dedizierten, zwischengeschalteten Steuergeräts kann entfallen. Entsprechend ist die MPE eingerichtet, von einem (übergeordneten) Fahrwerksteuergerät direkt und unmittelbar (über die Busschnittstelle) angesteuert zu werden und insbesondere als einzigen Sollwert die gewünschte Dämpferkraft für den Stoßdämpfer zu empfangen bzw. zu verarbeiten.

In einer weiteren bevorzugten Ausgestaltung der MPE ist die Leistungsplatine eingerichtet eine bzw. die genau eine Versorgungsspannung der Signalplatine zu erzeugen und besonders bevorzugt die Signalplatine damit über das Stecksystem zu versorgen. Somit muss in der MPE nur (genau) ein Spannungsversorgungsanschluss für die Versorgungsspannung der Hochvolt-Spannungslage vorgesehen werden, während ein dedizierter Spannungsversorgungsanschluss für die Signalplatine (etwa durch ein weiteres (Teil-)Bordnetz, beispielsweise ein 12V-Bordnetz) entfallen kann.

Der Elektromotor bzw. Elektromotorgenerator der Motor-Pumpe-Gruppe ist bevorzugt ein bürstenloser, permanenterregter Motor, insbesondere Synchronmotor, insbesondere DrehstromSynchronmotor, mit bevorzugt genau drei Motorphasen-Zuleitungen, über die ein Stator mit Magnetspulen ein Drehfeld für einen mit Permanentmagneten besetzten Rotor erzeugt. Der Elektromotor ist dabei bevorzugt ein drehzahlvariabler Antrieb, der als Stellmotor betreibbar und dazu eingerichtet und vorgesehen ist, vorbestimmte Stellungen bzw. Positionen gezielt anzufahren und/oder zu halten. Der Elektromotor und die Ansteuerung (Elektronikeinheit) schaffen weiterhin bevorzugt einen bidirektionalen Antrieb, der in beiden Rotationsrichtungen betrieben werden kann, und besonders bevorzugt auch Vier-Quadranten-fähig ist, das heißt er kann in beide Rotationsrichtungen auch als elektrischer Generator betrieben werden (Elektromotorgenerator) und damit auch hydraulische Energie aus dem System, beispielsweise aus dem Fahrwerk, ausleiten bzw. entnehmen und in elektrische Energie wandeln.

Die hydraulische Pumpe der Motor-Pumpe-Gruppe ist bevorzugt eine Zahnradpumpe, besonders bevorzugt eine Innenzahnradpumpe. Sie ist bevorzugt leckagekompensiert, das heißt sie weist nur kleine und/oder vernachlässigbare Leckagen auf, so dass die geförderte Hydraulikfluidmenge mit der Rotation bzw. der Anzahl von Rotationen fest verknüpft ist (hoher volumetrischer Wirkungsgrad). Entsprechend ist bevorzugt die Motor-Pumpe-Gruppe als Stellpumpe bzw. Stellantrieb für einen Verbraucher, insbesondere Stoßdämpfer, betreibbar und beispielsweise geeignet, vorbestimmte hydraulische Stellungen bzw. Positionen des Verbrauchers gezielt anzufahren und zu halten. Das hydraulische System weist in der Regel entsprechend keinen drucklosen Tank auf und/oder der Elektromotor wird bevorzugt nicht im Dauerbetrieb und/oder dauerhaft mit konstanter Rotationsgeschwindigkeit betrieben. Eine Motor-Pumpe-Gruppe mit einer leckagekompensierten Innenzahnradpumpe für den Reversierbetrieb ist beispielsweise aus der DE 10 2014 103 958 A1 bekannt.

In einer bevorzugten Ausgestaltung ist die MPE bzw. sind Motor-Pumpe-Gruppe und Elektronikeinheit in einem gemeinsamen Gehäuse, einem sogenannten MPE-Gehäuse (Motor-Pumpe-Einheit-Gehäuse) angeordnet, das in der Regel ein mehrteiliges Gehäuse ist. Dieses mehrteilige MPE-Gehäuse ist genau oder zumindest
- aus einem Motor-Pumpe-Gehäuse (in welchem die Motor-Pumpe-Gruppe bevorzugt vollständig aufgenommen ist) und
- aus einem davon verschiedenen Elektronikgehäuse oder -deckel (in welchem die Elektronikeinheit bevorzugt vollständig aufgenommen ist) zusammengefügt.

Dabei verlaufen die elektrischen Leitungen zwischen der Elektronikeinheit und der Motor-Pumpe-Gruppe bzw. dessen Elektromotor bevorzugt vollständig innerhalb des MPE-Gehäuses. Weiterhin bildet das MPE-Gehäuse bevorzugt ein geschlossenes, dichtes Gehäuse, das dicht gegenüber Verschmutzungen und anderen Umwelteinflüssen ist, beispielsweise luftdicht, wasserdicht oder spritzwasserdicht, womit die MPE beispielsweise an einer Fahrzeugunterseite verbaut werden kann. Das MPE-Gehäuse ist weiterhin bevorzugt auch dicht bzw. abschirmend gegenüber elektromagnetischer Strahlung, die beispielsweise aufgrund von hohen Wechselströmen im Elektromotor generiert wird, um die elektromagnetische Belastung (bzw. EMV-Belastung) gering zu halten bzw. zu reduzieren und/oder die EMV (elektromagnetische Verträglichkeit) zu erhöhen. Bevorzugt umfasst das gemeinsame MPE-Gehäuse auf seiner Außenseite, insbesondere auf der Außenseite des Elektronikgehäuses, als elektrische Schnittstellen zumindest oder genau eine Busschnittstelle (beispielsweise für einen CAN-Bus, einen CAN-FD-Bus oder einen Flexray-Bus) und genau eine Versorgungsspannungs-Schnittstelle, insbesondere für eine Hochvolt-Spannung von beispielsweise 400V oder 800V und/oder für die Hochvolt-Spannungslage. Weiterhin weist bevorzugt der Elektromotor innerhalb des Motorgehäuses keine elektrischen Schaltbauteile und/oder keine integrierten (Elektronik-)Bauteile auf.

In der Motor-Pumpe-Gruppe sind die hydraulische Pumpe und der Elektromotor bzw. Elektromotorgenerator miteinander in der Regel über eine rotierbare Motorwelle fest verbunden, wobei die Motorwellenachse in der Regel auch eine Längsachse für die Motor-Pumpe-Gruppe und die gesamte MPE bildet. Das Motor-Pumpe-Gehäuse ist in der Regel ein mehrteiliges Gehäuse und besteht beispielsweise
- aus einem (bevorzugt einstückigen) Motorgehäuse, das denjenigen Abschnitt oder Teil des Motor-Pumpe-Gehäuses bildet, der den Elektromotor bzw. Elektromotorgenerator beherbergt und bevorzugt vollständig umschließt, und
- aus einem Pumpengehäuse, das denjenigen Abschnitt oder Teil des Motor-Pumpe-Gehäuses bildet, der die Pumpe beherbergt und bevorzugt vollständig umschließt.

Das Pumpengehäuse bildet oder umfasst beispielsweise auch einen Pumpendeckel, der vorzugsweise die Pumpe an einer axialen Stirnseite des Motor-Pumpe-Gehäuses (vollständig) umschließt und/oder (auch) die axiale Stirnseite des Motor-Pumpe-Gehäuses bildet. Durch die axiale Stirnseite verläuft die Achse bzw. die Verlängerung der Motorwelle der Motor-Pumpe-Gruppe. Die axiale Stirnseite verläuft bevorzugt normal bzw. im Wesentlichen normal zur Motorwellenachse und/oder ist bevorzugt im Wesentlichen oder vollständig plan ausgebildet.

In einer bevorzugten Ausgestaltung umfasst das MPE-Gehäuse und/oder das Elektronikgehäuse neben der Busschnittstelle und der Versorgungsspannungs-Schnittstelle eine weitere elektrische Schnittstelle bzw. eine Zusatz-Schnittstelle, zur Ansteuerung der genau oder zumindest einen externen Vorrichtung, insbesondere von genau oder zumindest einem Dämpferstellventil. Diese Zusatz-Schnittstelle bildet eine (weitere) elektrische Gehäusedurchführung, wobei auf der Außenseite des Gehäuses bevorzugt ein elektrischer Stecker angeordnet ist.

In einer weiteren bevorzugten Ausgestaltung der MPE ist die Leistungsplatine räumlich näher an dem Motor-Pumpe-Gehäuse und/oder dem Motorgehäuse angeordnet als die Signalplatine und/oder verläuft parallel zu der Motorwelle. Dadurch befindet sich die Leistungsplatine in räumlicher Nähe zu dem Motor-Pumpe- bzw. Motorgehäuse, welches dann zur Wärmeableitung beiträgt. Zudem sind auf der Leistungsplatine bevorzugt die bzw. sämtliche Bauteile der Leistungselektronik auf der dem Motor-Pumpe- bzw. Motorgehäuse zugewandten Seite der Leistungsplatine angeordnet, was die Wärmeableitung weiter begünstigt. Besonders bevorzugt stehen die bzw. sämtliche Bauteile der Leistungselektronik mit dem Motor-Pumpe- bzw. Motorgehäuse unmittelbar und/oder über Wärmeleitmittel, wie Wärmeleitpads oder eine Wärmeleitpaste, in thermischem und/oder mechanischem Kontakt.

In einer weiteren bevorzugten Ausgestaltung der MPE ist das Elektronikgehäuse in Richtung der Motorwelle längsgestreckt und/oder bezüglich der Motorwelle seitlich am Motor-Pumpe- bzw. Motorgehäuse angeordnet. Weiterhin erstreckt sich das Elektronikgehäuse und/oder die Leistungsplatine und/oder die Signalplatine in Richtung der Motorwelle vollständig oder im Wesentlichen vollständig über die gesamte Länge des Motorgehäuses und/oder des Elektronikgehäuses. Dadurch können Bauteile der Elektronikeinheit auf der Leistungsplatine und/oder der Signalplatine in räumlicher Nähe zu Bauteilen bzw. Verbrauchern innerhalb der Motor-Pumpe-Gruppe angeordnet werden, die von der Elektronikeinheit angesteuert werden. Dies ermöglicht mit Vorteil kurze Zuleitungen beispielsweise auch zu der Pumpe bzw. dem Pumpengehäuse. Mit Vorteil weist die Pumpe zumindest einen (integrierten) Drucksensor auf, der mit der Elektronikeinheit und/oder der Signalplatine elektrisch verbunden ist. Derartige Drucksensoren sind beispielsweise aus der Druckschrift EP 3 279 476 A1 bekannt, deren Offenbarungsgehalt hinsichtlich der Ausgestaltung, Ansteuerung und Anordnung der Drucksensoren hiermit in den Offenbarungsgehalt der vorliegenden Beschreibung aufgenommen wird. Entsprechend ist bevorzugt die Elektronikeinheit und/oder die Signalplatine zur Ansteuerung von zumindest einem Drucksensor in dem Pumpengehäuse des Motor-Pumpe-Gehäuses eingerichtet.

Die Erfindung betrifft weiterhin einen Achssatz bzw. Motor-Pumpe-Einheit-Achssatz (MPE-Achssatz) umfassend eine wie oben beschriebene MPE, deren Motor-Pumpe-Gruppe eine erste Motor-Pumpe-Gruppe des MPE-Achssatzes mit erster hydraulischer Pumpe und erstem Elektromotor bildet. Der MPE-Achssatz umfasst weiterhin eine zweite Motor-Pumpe-Gruppe, umfassend eine zweite hydraulische Pumpe und einen zweiten Elektromotor zum Antreiben der zweiten hydraulischen Pumpe, wobei die zweite Motor-Pumpe-Gruppe ebenfalls die oben für die Motor-Pumpe-Gruppe der MPE beschriebenen Merkmale und/oder Eigenschaften aufweist. Die Elektronikeinheit bildet eine gemeinsame Elektronikeinheit zur unabhängigen Ansteuerung von erster und zweiter Motor-Pumpe-Gruppe. Die Elektronikeinheit umfasst eine Leistungsplatine und eine Signalplatine mit den zuvor beschriebenen (bevorzugten) Merkmalen und/oder Eigenschaften, wobei die Leistungsplatine bevorzugt unmittelbar mit jeweils dem ersten und zweiten Elektromotor verbunden ist. Bevorzugt ist die zweite Motor-Pumpe-Gruppe identisch bzw. symmetrisch zu der ersten Motor-Pumpe-Gruppe ausgebildet. Im Übrigen sind bevorzugt die oben für die MPE beschriebenen Merkmale sinngemäß auch in dem MPE-Achssatz verwirklicht.

In einer bevorzugten Ausgestaltung ist die Elektronikeinheit und/oder die Signalplatine zur Ansteuerung von genau oder zumindest einer oder zwei (zu dem MPE-Achssatz) externen Vorrichtungen eingerichtet, insbesondere zur Ansteuerung von zwei Dämpferverstellventilen, und/oder als Kraftregler für zwei Stoßdämpfer.

Bevorzugt ist der MPE-Achssatz bzw. sind die erste und die zweite Motor-Pumpe-Gruppe und die Elektronikeinheit in einem gemeinsamen Gehäuse bzw. MPE-Achssatz-Gehäuse (Motor-Pumpe-Einheit-Achssatz-Gehäuse) angeordnet, das in der Regel ein mehrteiliges Gehäuse ist. Dieses mehrteilige MPE-Achssatz-Gehäuse ist genau oder zumindest
- aus einem ersten Motor-Pumpe-Gehäuse (in welchem die erste Motor-Pumpe-Gruppe bevorzugt vollständig aufgenommen ist),
- aus einem davon verschiedenen zweiten Motor-Pumpe-Gehäuse (in welchem die zweite Motor-Pumpe-Gruppe bevorzugt vollständig aufgenommen ist) und
- aus einem davon verschiedenen Elektronikgehäuse oder -deckel (in welchem die gemeinsame Elektronikeinheit bevorzugt vollständig aufgenommen ist) zusammengefügt.

Dabei verlaufen die elektrischen Leitungen zwischen der Elektronikeinheit und den Motor-Pumpe-Gruppen bzw. deren Elektromotoren bevorzugt vollständig innerhalb des MPE-Achssatz-Gehäuses. Weiterhin bildet das MPE-Achssatz-Gehäuse bevorzugt ein geschlossenes, dichtes Gehäuse, mit Eigenschaften und/oder Merkmalen, wie sie zuvor bereits für das MPE-Gehäuse beschrieben wurden. Bevorzugt umfasst das gemeinsame MPE-Achssatz-Gehäuse auf seiner Außenseite, insbesondere auf der Außenseite des Elektronikgehäuses, als elektrische Schnittstellen zumindest oder genau eine Busschnittstelle (beispielsweise für einen CAN-Bus, einen CAN-FD-Bus oder einen Flexray-Bus) und genau eine Versorgungsspannungs-Schnittstelle, insbesondere für eine Hochvolt-Spannung von beispielsweise 400V oder 800V und/oder für die Hochvolt-Spannungslage eines Fahrzeugs. Weiterhin sind die Motor-Pumpe-Gehäuse von erster und zweiter Motor-Pumpe-Gruppe bevorzugt jeweils wie oben beschrieben ausgestaltet und umfassen bevorzugt jeweils ein Motorgehäuse und ein Pumpengehäuse.

In einer bevorzugten Ausgestaltung umfasst das MPE-Achssatz-Gehäuse und/oder das Elektronikgehäuse neben der Busschnittstelle und der Versorgungsspannungs-Schnittelle genau oder zumindest eine oder zwei weitere elektrische Schnittstellen bzw. genau oder zumindest eine oder zwei Zusatz-Schnittstellen, zur Ansteuerung der genau oder zumindest einen oder zwei externen Vorrichtungen, insbesondere von einem oder zwei Dämpferstellventilen. Diese Zusatz-Schnittstellen bilden weitere elektrische Gehäusedurchführungen, wobei auf der Außenseite des Gehäuses bevorzugt jeweils ein elektrischer Stecker angeordnet ist. Bevorzugt sind die zwei oder mehr Zusatz-Schnittstellen zueinander identisch und/oder symmetrisch ausgebildet und/oder angeordnet.

In einer weiteren bevorzugten Ausgestaltung des MPE-Achssatzes ist die Leistungsplatine näher an den Motor-Pumpe-Gehäusen und/oder den Motorgehäusen angeordnet als die Signalplatine. Dadurch befindet sich die Leistungsplatine in räumlicher Nähe zu den Motor-Pumpe- bzw. Motorgehäusen, welche zur Wärmeableitung beitragen. Zudem sind auf der Leistungsplatine bevorzugt die bzw. sämtliche Bauteile der Leistungselektronik auf der den Motor-Pumpe- bzw. Motorgehäusen zugewandten Seite der Leistungsplatine angeordnet, was die Wärmeableitung weiter begünstigt. Besonders bevorzugt stehen die bzw. sämtliche Bauteile der Leistungselektronik mit den Motor-Pumpe- bzw. Motorgehäusen unmittelbar und/oder über Wärmeleitmittel, wie Wärmeleitpads oder eine Wärmeleitpaste, in thermischem und/oder mechanischem Kontakt.

In einer weiteren bevorzugten Ausgestaltung des MPE-Achssatzes liegen die Motorwellen beider Motor-Pumpe-Gruppen auf einer gemeinsamen Achse, die bevorzugt zugleich eine Längsachse beider Motor-Pumpe-Gehäuse und/oder des MPE-Achssatz-Gehäuses bildet. Besonders bevorzugt sind die Pumpen an jeweils gegenüberliegenden Stirnseiten des MPE-Achssatzes angeordnet und/oder weisen voneinander weg. Das Elektronikgehäuse ist bevorzugt in Richtung der gemeinsamen Achse der Motorwellen längsgestreckt und/oder bezüglich der gemeinsamen Achse der Motorwellen seitlich an den Motor-Pumpe- bzw. Motorgehäusen angeordnet. Weiterhin erstreckt sich das Elektronikgehäuse und/oder die Leistungsplatine und/oder die Signalplatine in Richtung der gemeinsamen Achse der Motorwellen vollständig oder im Wesentlichen vollständig über die gesamte Länge beider Motorgehäuse. Dadurch können Bauteile der Elektronikeinheit auf der Leistungsplatine und/oder der Signalplatine in räumlicher Nähe zu Bauteilen bzw. Verbrauchern innerhalb der Motor-Pumpe-Gruppen angeordnet werden, die von der Elektronikeinheit angesteuert werden. Dies ermöglicht mit Vorteil kurze Zuleitungen. Bevorzugt weisen hierbei beide Pumpen bzw. Pumpengehäuse jeweils genau oder zumindest einen (wie oben beschriebenen) Drucksensor auf und die Elektronikeinheit und/oder die Signalplatine ist bevorzugt zur Ansteuerung der Drucksensoren eingerichtet.

Die Erfindung betrifft weiterhin einen Baukasten umfassend eine wie oben beschriebene MPE oder einen wie oben beschriebenen MPE-Achssatz. Dabei bildet die Leistungsplatine der Elektronikeinheit von MPE oder MPE-Achssatz in dem Baukasten eine erste Leistungsplatine, die eine erste Hochvolt-Spannungslage aufweist, das heißt für eine vorbestimmte erste Hochvolt-Spannungslage eingerichtet ist. Ebenso bildet der Elektromotor der bzw. jeder Motor-Pumpe-Gruppe von MPE oder MPE-Achssatz in dem Baukasten einen jeweils ersten Elektromotor, der eine an die vorbestimmte erste Hochvolt-Spannungslage angepasste Spulenwicklung (hinsichtlich beispielsweise Spulendrahtdurchmesser und/oder Windungszahl der Magnetspulen) aufweist.

Der Baukasten umfasst weiterhin eine zweite Leistungsplatine für die Elektronikeinheit, die eine vorbestimmte zweite, von der ersten verschiedene Hochvolt-Spannungslage aufweist, mit der die Elektronikeinheit (anstelle der ersten Leistungsplatine) betrieben werden kann. Der Baukasten umfasst bevorzugt weiterhin auch einen zweiten Elektromotor für die bzw. für jede Motor-Pumpe-Gruppe, der eine an die vorbestimmte zweite Hochvolt-Spannungslage angepasste Spulenwicklung aufweist, insbesondere einen anderen Drahtdurchmesser und/oder eine andere Windungszahl der Magnetspulen aufweist als der (jeweils) erste Elektromotor, und mit dem die (jeweilige) Motor-Pumpe-Gruppe (anstelle des ersten Elektromotors) betrieben werden kann.

Der erfindungsgemäße Baukasten schafft somit eine MPE bzw. einen MPE-Achssatz, welche(r) leicht an unterschiedliche Hochvolt-Spannungslagen angepasst werden kann, insbesondere nur durch Austausch der Leistungsplatine sowie gegebenenfalls durch Austausch der Elektromotoren bzw. Motor-Pumpe-Gruppen.

In einer bevorzugten Ausgestaltung des Baukastens weisen erste und zweite Leistungsplatine ein identisches Platinenlayout auf. Erste und zweite Leistungsplatine unterscheiden sich beispielsweise nur durch die jeweilige Bestückung, beispielsweise mit den (Leistungs-)Elektronik-Bauteilen. Bevorzugt weist dabei die erste Leistungsplatine eine Spannungslage von 400V und die zweite Leistungsplatine eine Spannungslage von 800V auf.

Ein erfindungsgemäßes Fahrwerksystem bzw. eine erfindungsgemäße Fahrwerkachse für ein Fahrzeug umfasst genau oder zumindest einen ersten und zweiten hydraulisch aktiv steuerbaren Stoßdämpfer mit jeweils zwei beispielsweise durch einen beweglichen Dämpferkolben getrennten Dämpfer- bzw. Druckkammern, welche bevorzugt einer gemeinsamen Fahrwerkachse zugeordnet oder an dieser angeordnet sind, sowie zumindest eine erste und eine zweite wie oben beschriebene MPE oder zumindest einen wie oben beschriebenen MPE-Achssatz, wobei die Motor-Pumpe-Gruppe der ersten MPE oder die erste Motor-Pumpe-Gruppe des MPE-Achssatzes die Druckkammern des ersten Stoßdämpfers hydraulisch miteinander verbindet und die Motor-Pumpe-Gruppe der zweiten MPE oder die zweite Motor-Pumpe-Gruppe des MPE-Achssatzes die Druckkammern des zweiten Stoßdämpfers hydraulisch miteinander verbindet. Dadurch kann beispielsweise eine "weiche" oder "harte" Dämpfung eingestellt werden, indem beispielsweise Druckstöße aus den Druckkammern durch die jeweilige Motor-Pumpe-Gruppe mehr oder weniger gedämpft bzw. gedrosselt werden. In diesem Fall wird somit die jeweilige Motor-Pumpe-Gruppe hydraulisch angetrieben, so dass die Elektromotoren der Motor-Pumpe-Gruppen als Elektromotorgeneratoren betrieben werden können und somit elektrische Energie rückgewonnen werden kann (Rekuperation). Weiterhin kann auch die Null- bzw. Ruhelage der Stoßdämpfer aktiv bzw. gezielt eingestellt und auch während des Fahrbetriebs (laufend) verändert werden (aktives Fahrwerk). Es versteht sich, dass das Fahrwerksystem eine oder mehrere weitere bevorzugt ebenso ausgestaltete Achsen aufweisen kann.

Bevorzugt weisen die hydraulisch aktiv steuerbaren Stoßdämpfer der Fahrwerkachse bzw. des Fahrwerksystems weiterhin elektrisch ansteuerbare Dämpferverstellventile auf, die durch die Motor-Pumpe-Einheiten oder den MPE-Achssatz angesteuert werden. Dabei weist ein Stoßdämpfer genau oder zumindest ein Dämpferverstellventil auf, das (zusätzlich bzw. parallel zu der hydraulischen Pumpe der jeweiligen Motor-Pumpe-Gruppe) die beiden Druckkammern des Stoßdämpfers hydraulisch verbindet und dabei als (elektrisch) verstellbare Drossel wirkt. Das Dämpferverstellventil bildet dabei eine wie oben beschriebene externe Vorrichtung. Die Elektronikeinheit und/oder die Signalplatine der Motor-Pumpe-Einheiten und/oder des MPE-Achssatzes ist/sind bevorzugt jeweils als Kraftregler für den/die jeweils verbundenen Stoßdämpfer ausgebildet. Die Elektronikeinheit der MPE bzw des MPE-Achssatzes kombiniert als Kraftregler die hydraulische Ansteuerung des Stoßdämpfers über die Pumpe der jeweiligen Motor-Pumpe-Gruppe und die elektrische Ansteuerung des Dämpferstellventils. Sie ist somit eingerichtet das Zusammenspiel von Pumpe bzw. Motor-Pumpe-Gruppe und Dämpferstellventil für den angesteuerten Stoßdämpfer zu regeln. Ein Fahrwerksteuergerät, das ein übergeordnetes Steuergerät für die Elektronikeinheit(en) von MPE oder MPE-Achssatz bildet, muss somit lediglich eine für einen Stoßdämpfer gewünschte Dämpferkraft vorgeben. Ein Kraftregler in Form eines dedizierten, zwischengeschalteten Steuergeräts kann entfallen. Entsprechend ist in dem Fahrwerkssystem die MPE eingerichtet, von einem (übergeordneten) Fahrwerksteuergerät direkt und unmittelbar (über die Busschnittstelle) angesteuert zu werden und insbesondere als einzigen Sollwert die Dämpferkraft für den Stoßdämpfer zu empfangen bzw. zu verarbeiten.

### KURZE BESCHREIBUNG DER ZEICHNUNGEN

Die Erfindung wird im Folgenden mit Bezug auf die beiliegenden Zeichnungen beschrieben. Die Zeichnungen sind lediglich schematische Darstellungen und die Erfindung ist nicht auf die speziellen, dargestellten Ausführungsbeispiele beschränkt.
- Figur 1: zeigt eine perspektivische Explosionsansicht einer MPE,
- Figur 2: zeigt eine perspektivische Explosionsansicht eines MPE-Achssatzes,
- Figur 3: zeigt eine perspektivische Ansicht einer Leistungsplatine und einer Signalplatine, und
- Figur 4: zeigt eine schematische Ansicht einer Achse eines Fahrwerksystems mit einem MPE-Achssatz.

### DETAILLIERTE BESCHREIBUNG

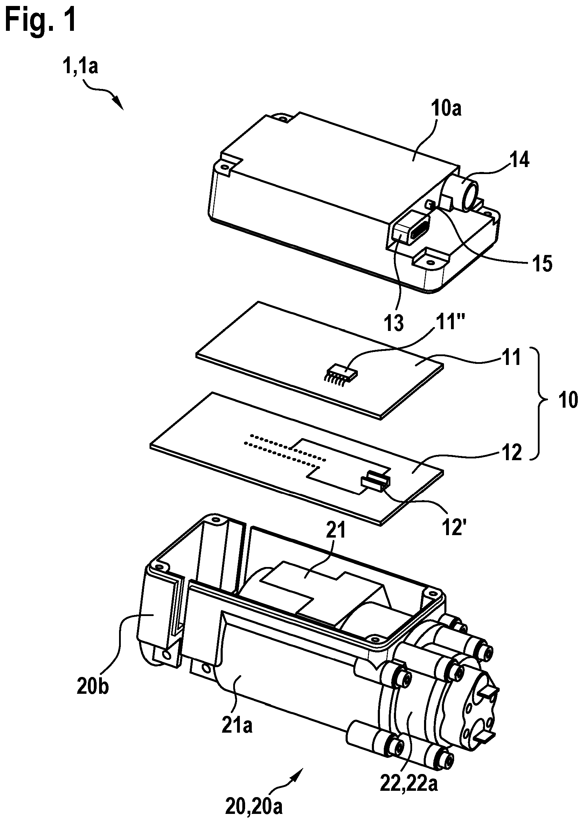

In Figur 1 ist eine perspektivische Explosionsansicht einer Motor-Pumpe-Einheit 1 mit einem gemeinsamen Motor-Pumpe-Einheit-Gehäuse 1a dargestellt. Das Motor-Pumpe-Einheit-Gehäuse 1a besteht in dem dargestellten Ausführungsbeispiel aus einem Elektronikgehäuse 10a, das die Elektronikeinheit 10 beherbergt, einem Motor-Pumpe-Gehäuse 20a, das die Motor-Pumpe-Gruppe 20 beherbergt, sowie einem Gehäusedeckel 20b. Das Motor-Pumpe-Gehäuse 20a besteht aus einem Motorgehäuse 21a, das den Elektromotor 21 beherbergt, sowie einem in dem Ausführungsbeispiel mehrteiligen Pumpengehäuse 22a, das die Pumpe 22 beherbergt. Dabei sind der Elektromotor 21 und die Pumpe 22 über eine nicht dargestellte rotierbare Motorwelle fest verbunden.

Die Elektronikeinheit 10 umfasst zwei Leiterplatinen, eine Signalplatine 11 und eine Leistungsplatine 12, die für verschiedene Spannungslagen ausgelegt sind. Das Elektronikgehäuse 10a umfasst eine Busschnittstelle 13, eine Versorgungsspannungs-Schnittstelle 14, sowie eine Zusatz-Schnittstelle 15. Die Busschnittstelle 13 dient zur Kommunikation mit einem übergeordneten Fahrwerksteuergerät 16, während über die Versorgungsspannungs-Schnittstelle 14 die Versorgungsspannung der Hochvolt-Spannungslage der Elektronikeinheit 10 bzw. der Leistungsplatine 11 zugeführt wird. Die Zusatz-Schnittstelle 15 ist für die Ansteuerung bzw. den Betrieb einer externen Vorrichtung, insbesondere eines Dämpferverstellventils 54' eines Stoßdämpfers 54 vorgesehen.

In der Elektronikeinheit 10 sind die beiden Leiterplatinen 11, 12 parallel zueinander bzw. übereinander und voneinander beabstandet angeordnet, wobei die Leistungsplatine 12 auf der zum Elektromotor 21 hin gewandten Seite der Elektronikeinheit 10 angeordnet ist und über nicht dargestellte Wärmeleitmittel mit dem Motorgehäuse 21a in Kontakt steht. Dabei ist die Leistungsplatine in dem Ausführungsbeispiel seitlich an dem Motorgehäuse 21a angeordnet und erstreckt sich im Wesentlichen über das gesamte Motorgehäuse 21a, was kurze Wege zwischen der Leistungsplatine 12 und allen anzusteuernden Bauelementen (Magnetspule, Drucksensoren, etc.) ermöglicht. Auch die Signalplatine 11 erstreckt sich in dem dargestellten Ausführungsbeispiel im Wesentlichen über das gesamte Motorgehäuse 21a.

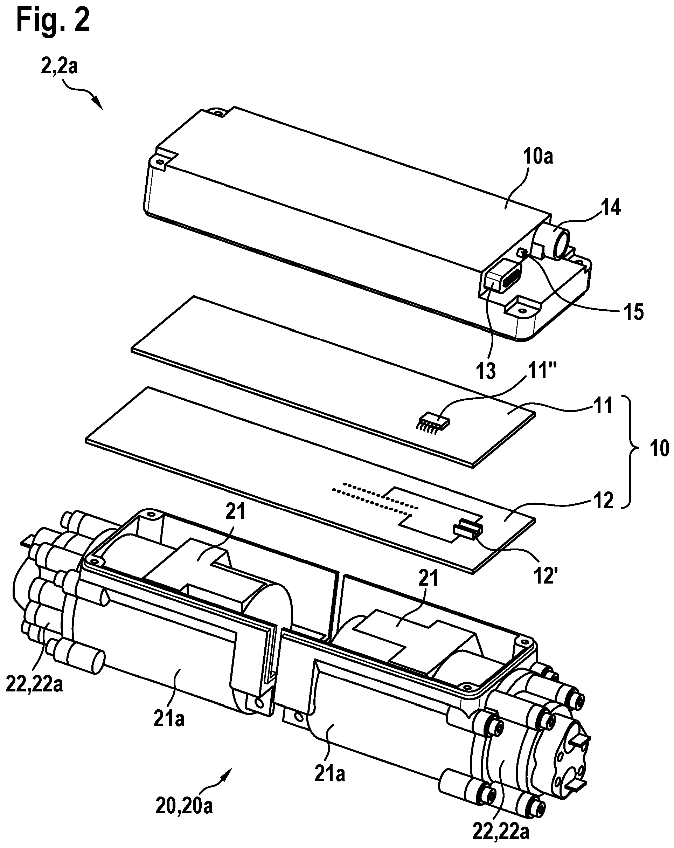

In Figur 2 ist eine perspektivische Explosionsansicht eines Motor-Pumpe-Einheit-Achssatzes 2 in einem MPE-Achssatzgehäuse 2a dargestellt. Dieser umfasst zwei Motor-Pumpe-Gruppen 20, mit entsprechenden Motor-Pumpe-Gehäusen 20a. Die Elektronikeinheit 10 bildet hierbei eine gemeinsame Elektronikeinheit für beide Motor-Pumpe-Gruppen 20 und erstreckt sich im Wesentlichen vollständig über beide Motor-Pumpe-Gehäuse 20a bzw. deren Motorgehäuse 21a. Ebenso steht die Leistungsplatine 11 über wiederum nicht dargestellte Wärmeleitmittel mit den beiden Motorgehäusen 21a in Kontakt.

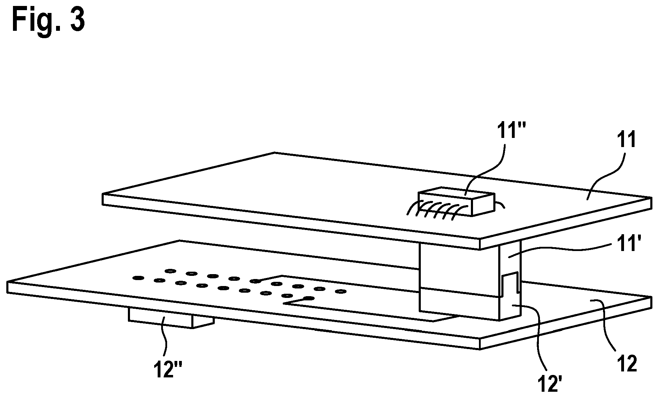

In Figur 3 ist eine perspektivische Ansicht der beiden Leiterplatinen (Signalplatine 11, Leistungsplatine 12) der Elektronikeinheit 10 dargestellt. Diese sind über ein Stecksystem 11',12' mechanisch und elektrisch miteinander verbunden. Das Stecksystem umfasst zwei korrespondierende Leiterplatinenstecker, ein Signalplatinenstecker 11' und einen Leistungsplatinenstecker 12', die jeweils auf den Platinen fest verlötet sind. Auf der Signalplatine 11 ist eine CPU 11" angeordnet und auf der zum Motorgehäuse 21a hingewandten bzw. von der Signalplatine 11 abgewandten Seite der Leistungsplatine 12 sind die Leistungs-Schalttransistoren 12" einer B6-Brückenschaltung angeordnet.

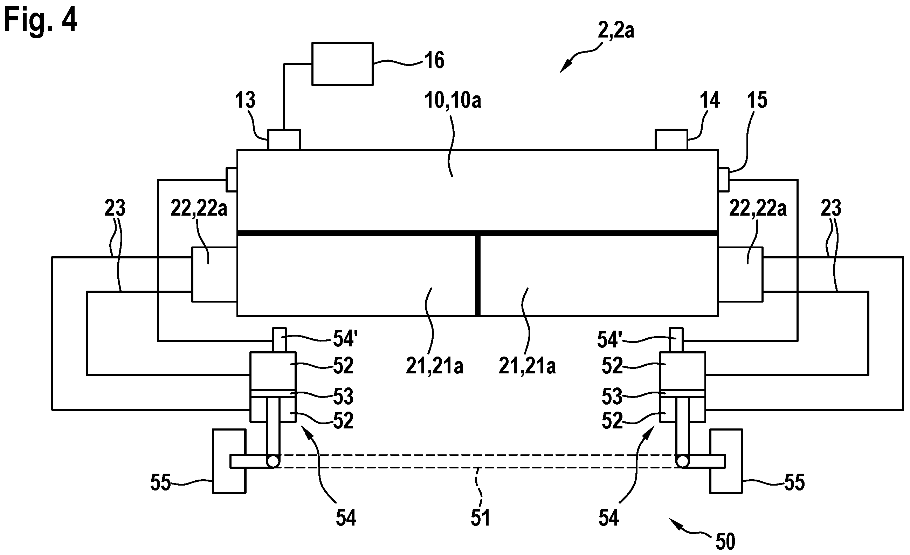

In Figur 4 ist eine Fahrwerkachse 51 eines Fahrwerksystems 50 mit einem Motor-Pumpe-Einheit-Achssatz 2 schematisch dargestellt. Dabei führen von den Pumpen 22 bzw. von den Pumpengehäusen 22a jeweils hydraulische Leitungen 23 zu den Druckkammern 52 eines Stoßdämpfers 54. Die beiden Druckkammern 52 eines Stoßdämpfers 54 sind durch einen in einem Dämpferzylinder axial verfahrbaren Kolben 53 getrennt. In dem dargestellten Ausführungsbeispiel sind die Zylinder der Stoßdämpfer jeweils mit der gefederten Masse des Fahrzeugs bzw. der Karosserie verbunden, während die Kolben 53 mit der ungefederten Masse des Fahrzeugs bzw. einem Rad 55 und/oder einer Fahrwerkachse 51 verbunden sind. Dies kann jedoch auch umgekehrt ausgestaltet sein. Weiterhin wurde in der schematischen Darstellung auf die üblicherweise weiterhin vorgesehenen Federelemente, beispielsweise eine Luft- und/oder Stahlfeder, verzichtet.

Über die Zusatz-Schnittstelle 15 verlaufen elektrische Leitungen zu Dämpferverstellventilen 54' der Stoßdämpfer 54, die verstellbare Drosselelemente für den Hydraulikfluidfluss zwischen den beiden Druckkammern 52 bilden. Diese Dämpferverstellventile können in an sich bekannter Art und Weise beispielsweise an bzw. auf dem Kolben 53 oder in zusätzlichen, beispielsweise seitlich am Dämpferzylinder verlaufenden Fluidkanälen zwischen den Dämpferkammern 52 angeordnet sein. Entsprechend ist die Elektronikeinheit 10 bzw. die Signalplatine 11 des MPE-Achssatzes 2 als Kraftregler für die beiden Stoßdämpfer 54 eingerichtet.

### BEZUGSZEICHENLISTE

- 1: MPE
- 1a: MPE-Gehäuse
- 2: MPE-Achssatz
- 2a: MPE-Achssatzgehäuse
- 10: Elektronikeinheit
- 10a: Elektronikgehäuse
- 11: Signalplatine
- 11': Signalplatinen-Stecker
- 11": CPU, Mikroprozessor
- 12: Leistungsplatine
- 12': Leistungsplatinen-Stecker
- 12": Leistungs-Schalttransistor, B6-Brücke, Leistungselektronik
- 13: Busschnittstelle
- 14: Versorgungsspannungs-Schnittstelle
- 15: Zusatz-Schnittstelle
- 16: Fahrwerksteuergerät, übergeordnetes Steuergerät
- 20: Motor-Pumpe-Gruppe
- 20a: Motor-Pumpe-Gehäuse
- 20b: Gehäusedeckel
- 21: Elektromotor, Elektromotorgenerator
- 21a: Motorgehäuse
- 22: Pumpe
- 22a: Pumpengehäuse
- 23: hydraulische Leitung
- 50: Fahrwerksystem
- 51: Fahrwerkachse
- 52: Druckkammer
- 53: Kolben
- 54: Stoßdämpfer
- 54': Dämpferverstellventil, externe Vorrichtung
- 55: Rad

## Patentansprüche

1. Motor-Pumpe-Einheit (1) zum Bereitstellen von hydraulischer Energie in einem aktiven Fahrwerksystem (50) eines Fahrzeugs mit einem steuerbaren und aktiv angesteuerten Stoßdämpfer, umfassend
- eine Motor-Pumpe-Gruppe (20), umfassend eine hydraulische Pumpe (22) und einen Elektromotor (21) zum Antreiben der hydraulischen Pumpe, und
- eine Elektronikeinheit (10) zur Ansteuerung der Motor-Pumpe-Gruppe,
wobei die hydraulische Pumpe (22) eine Zahnradpumpe ist,
**dadurch gekennzeichnet,**
**dass** die Elektronikeinheit eine Leistungsplatine (12) mit Leistungselektronik und eine baulich getrennte Signalplatine (11) aufweist, und
**dass** die Leistungsplatine (12) eine Hochvolt-Spannungslage und die Signalplatine (11) eine Niedervolt-Spannungslage aufweist, die kleiner als die Hochvolt-Spannungslage ist,
wobei die Spannungslage die höchste auf der Leiterplatine im Betrieb auftretende Spannung und/oder die Maximal-Spannung, für die die Leiterplatine eingerichtet ist, bezeichnet.

2. Motor-Pumpe-Einheit (1) nach Anspruch 1, **dadurch gekennzeichnet, dass** die Hochvolt-Spannungslage 48V, 400V oder 800V und/oder die Niedervolt-Spannungslage 5V, 12V oder 24V beträgt.

3. Motor-Pumpe-Einheit (1) nach Anspruch 1 oder 2, **dadurch gekennzeichnet**
- **dass** die Leistungselektronik Leistungs-Schalttransistoren (12"), insbesondere eine B6-Brücke und/oder einen Spannungswandler von der Hochvolt- zur Niedervolt-Spannungslage, und/oder eine Versorgungsspannungs-Schnittstelle zur Spannungsversorgung der Signalplatine und/oder eine (Hochvolt-)Versorgungsspannungs-Schnittstelle umfasst, und/oder
- **dass** die Signalplatine (11) eine CPU (11"), einen Mikroprozessor und/oder ein FPGA und/oder eine Busschnittstelle (13) und/oder eine Versorgungsspannungs-Schnittstelle zur Spannungsversorgung der Signalplatine und/oder eine galvanische Trennung bzw. galvanische Trennelemente zwischen der Versorgungsspannungs-Schnittstelle einerseits und der Busschnittstelle andererseits umfasst.

4. Motor-Pumpe-Einheit (1) nach einem der vorhergehenden Ansprüche,
wobei Leistungsplatine (12) und Signalplatine (11) über ein Stecksystem (11', 12') miteinander verbunden sind, und/oder
wobei Leistungsplatine und Signalplatine parallel zueinander angeordnet sind und/oder Bauteile der Leistungselektronik (12") auf einer von der Signalplatine abgewandten Seite der Leistungsplatine angeordnet sind, und/oder
wobei die Elektronikeinheit (10) und/oder die Signalplatine zur Ansteuerung von genau oder zumindest einer externen Vorrichtung (54') eingerichtet ist/sind, insbesondere zur Ansteuerung von einem oder mehreren Dämpferverstellventilen (54'), und/oder
wobei die Elektronikeinheit und/oder die Signalplatine als Kraftregler für einen oder mehrere Stoßdämpfer eingerichtet ist.

5. Motor-Pumpe-Einheit (1) nach einem der vorhergehenden Ansprüche,
wobei die Elektronikeinheit (10) und/oder die Signalplatine mit einem Drucksensor verbunden ist/sind.

6. Motor-Pumpe-Einheit (1) nach einem der vorhergehenden Ansprüche,
wobei die Motor-Pumpe-Einheit ein Motor-Pumpe-Einheit-Gehäuse (1a) umfasst, das bevorzugt ein Motor-Pumpe-Gehäuse (20a) und ein Elektronikgehäuse (10a) umfasst, wobei das Motor-Pumpe-Einheit-Gehäuse und/oder das Elektronikgehäuse eine Busschnittstelle (13) und eine Versorgungsspannungs-Schnittstelle (14) und bevorzugt eine elektrische Zusatz-Schnittstelle (15) zur Ansteuerung der genau oder zumindest einen externen Vorrichtung (54') umfasst, und/oder
wobei die Leistungsplatine (12) näher an dem Motor-Pumpe-Gehäuse und/oder einem Motorgehäuse (21a) des Motor-Pumpe-Gehäuses angeordnet ist als die Signalplatine (11), und/oder
wobei die Bauteile der Leistungselektronik (12")
- auf einer dem Motorgehäuse zugewandten Seite der Leistungsplatine angeordnet sind und/oder
- mit dem Motorgehäuse unmittelbar und/oder über Wärmeleitmittel in thermischem und/oder mechanischem Kontakt stehen, und/oder
wobei das Elektronikgehäuse und/oder die Leistungsplatine und/oder die Signalplatine das Motorgehäuse vollständig oder im Wesentlichen vollständig überstreckt und/oder seitlich an dem Motor-Pumpe- und/oder Motorgehäuse angeordnet ist.

7. Motor-Pumpe-Einheit-Achssatz (2) umfassend eine Motor-Pumpe-Einheit (1) nach einem der Ansprüche 1 bis 5, deren Motor-Pumpe-Gruppe (20) eine erste Motor-Pumpe-Gruppe (20) mit erster hydraulischer Pumpe (22) und erstem Elektromotor (21) bildet,
wobei der Motor-Pumpe-Einheit-Achssatz eine zweite Motor-Pumpe-Gruppe (20), umfassend eine zweite hydraulische Pumpe (22) und einen zweiten Elektromotor (21) zum Antreiben der zweiten hydraulischen Pumpe, umfasst, und
wobei die Elektronikeinheit (10) eine gemeinsame Elektronikeinheit zur Ansteuerung von erster und zweiter Motor-Pumpe-Gruppe bildet.

8. Motor-Pumpe-Einheit-Achssatz (2) nach Anspruch 7,
wobei die Elektronikeinheit (10) und/oder die Signalplatine (11) zur Ansteuerung von zumindest oder genau einer oder zwei externen Vorrichtungen (54') eingerichtet ist/sind, insbesondere zur Ansteuerung von zwei oder mehreren Dämpferverstellventilen (54'), und/oder
wobei die Elektronikeinheit und/oder die Signalplatine als Kraftregler für zwei oder mehr Stoßdämpfer (54) eingerichtet ist.

9. Motor-Pumpe-Einheit-Achssatz (2) nach Anspruch 7 oder 8,
wobei der Motor-Pumpe-Einheit-Achssatz ein Motor-Pumpe-Einheit-Achssatz-Gehäuse (2a) umfasst, das bevorzugt zwei Motor-Pumpe-Gehäuse (20a) und ein Elektronikgehäuse (10a) umfasst, und/oder
wobei das Motor-Pumpe-Einheit-Achssatz-Gehäuse und/oder das Elektronikgehäuse eine Busschnittstelle (13) und eine Versorgungsspannungs-Schnittstelle (14) und bevorzugt eine oder zwei elektrische Zusatz-Schnittstellen (15) zur Ansteuerung der genau oder zumindest einen oder zwei externen Vorrichtungen (54') umfasst, und/oder
wobei die Leistungsplatine (12) näher an den Motor-Pumpe-Gehäusen und/oder Motorgehäusen (21a) der Motor-Pumpe-Gehäuse angeordnet ist als die Signalplatine (11), und/oder
wobei die Bauteile der Leistungselektronik (12")
- auf einer den Motorgehäusen zugewandten Seite der Leistungsplatine angeordnet sind und/oder
- mit den Motorgehäusen unmittelbar und/oder über Wärmeleitmittel in thermischem und/oder mechanischem Kontakt stehen, und/oder
wobei die Motor-Pumpe-Gehäuse und/oder deren Motorgehäuse auf einer gemeinsamen Achse angeordnet sind, und/oder
wobei das Elektronikgehäuse und/oder die Leistungsplatine und/oder die Signalplatine beide Motorgehäuse vollständig oder im Wesentlichen vollständig überstreckt und/oder seitlich an den Motor-Pumpe- und/oder Motorgehäusen angeordnet ist.

10. Baukasten umfassend eine Motor-Pumpe-Einheit nach einem der Ansprüche 1 bis 6 oder einen Motor-Pumpe-Einheit-Achssatz nach einem der Ansprüche 7 bis 9, wobei die Leistungsplatine eine erste Leistungsplatine bildet, die eine vorbestimmte erste Hochvolt-Spannungslage aufweist,
und der oder die Elektromotoren erste Elektromotoren bilden, mit einer an die erste Hochvolt-Spannungslage angepassten Spulenwicklung, weiterhin umfassend
- eine zweite Leistungsplatine, die eine vorbestimmte zweite, von der ersten verschiedene Hochvolt-Spannungslage aufweist, und bevorzugt
- einen zweiten Elektromotor für die bzw. für jede Motor-Pumpe-Gruppe, der eine an die vorbestimmte zweite Hochvolt-Spannungslage angepasste Spulenwicklung aufweist, insbesondere mit einer von dem ersten Elektromotor verschiedenen Spulenwicklung.

11. Baukasten nach Anspruch 10, wobei erste und zweite Leistungsplatine ein identisches Platinenlayout aufweisen und bevorzugt Spannungslagen von 400V und 800V aufweisen.

12. Fahrwerkachse (51) umfassend einen Motor-Pumpe-Einheit-Achssatz (2) nach einem der Ansprüche 7 bis 9,
wobei die Fahrwerkachse bevorzugt vormontiert ist und zwei hydraulisch ansteuerbare Stoßdämpfer (54) aufweist, die besonders bevorzugt jeweils mit den Pumpen (22) der ersten und zweiten Motor-Pumpe-Gruppe (20) des Motor-Pumpe-Einheit-Achssatzes hydraulisch verbunden sind, und
wobei die Stoßdämpfer jeweils genau oder zumindest ein elektrisch ansteuerbares Dämpferverstellventil (54') aufweisen, die jeweils durch den Motor-Pumpe-Einheit-Achssatz bzw. dessen Elektronikeinheit (10) angesteuert werden und/oder
wobei die Elektronikeinheit und/oder die Signalplatine (11) als Kraftregler für die Stoßdämpfer eingerichtet ist/sind.

13. Fahrwerkachse (51) umfassend zwei Motor-Pumpe-Einheiten (1) nach einem der Ansprüche 1 bis 6,
wobei die Fahrwerkachse bevorzugt vormontiert ist und zwei hydraulisch ansteuerbare Stoßdämpfer (54) aufweist, die besonders bevorzugt jeweils mit den Pumpen (22) der beiden Motor-Pumpe-Einheiten (1) hydraulisch verbunden sind, und
wobei die Stoßdämpfer jeweils genau oder zumindest ein elektrisch ansteuerbares Dämpferverstellventil (54') aufweisen, die jeweils durch eine der beiden Motor-Pumpe-Einheiten bzw. deren Elektronikeinheiten (10) angesteuert werden und/oder
wobei die Elektronikeinheit und/oder die Signalplatine (11) der Motor-Pumpe-Einheiten jeweils als Kraftregler für den jeweiligen Stoßdämpfer eingerichtet sind.

14. Fahrwerksystem (50) für ein Fahrzeug, umfassend
eine erste Fahrwerkachse (51) nach einem der Ansprüche 12 oder 13,
eine zweite Fahrwerkachse nach einem der Ansprüche 12 oder 13, sowie
ein Fahrwerksteuergerät (16), das mit den Elektronikeinheiten (10) der Motor-Pumpe-Einheiten (1) und/oder Motor-Pumpe-Einheit-Achssätze (2) über die Busschnittstelle (13) verbunden ist.

## Claims

1. A motor-pump unit (1) for making available hydraulic energy in an active chassis system (50) of a vehicle with a controllable and actively regulated shock absorber, comprising
- a motor-pump group (20), comprising a hydraulic pump (22) and an electric motor (21) for driving the hydraulic pump, and
- an electronic unit (10) for regulating the motor-pump group,
wherein the hydraulic pump (22) is a gear pump,
**characterized in that**
the electronic unit has a power board (12) with power electronics and a structurally separate signal board (11), and **in that**
the power board (12) has a high-voltage voltage level, and the signal board (11) has a low-voltage voltage level that is lower than the high-voltage voltage level,
wherein the voltage level refers to the highest voltage occurring on the circuit board during operation and/or the maximum voltage for which the circuit board is set up.

2. The motor-pump unit (1) according to claim 1, **characterized in that** the high-voltage voltage level amounts to 48 V, 400 V or 800 V and/or the low-voltage voltage level amounts to 5 V, 12 V or 24 V.

3. The motor-pump unit (1) according to claim 1 or 2, **characterized in that**
- the power electronics comprises power switching transistors (12"), in particular a B6 bridge and/or a voltage converter from the high-voltage to the low-voltage voltage level, and/or a supply voltage interface for the voltage supply of the signal board and/or a (high-voltage) supply voltage interface, and/or
- the signal board (11) comprises a CPU (11"), a microprocessor and/or an FPGA and/or a bus interface (13) and/or a supply voltage interface for the voltage supply of the signal board and/or a galvanic separation or galvanic separating elements between the supply voltage interface on the one hand and the bus interface on the other hand.

4. The motor-pump unit (1) according to any of the preceding claims,
wherein the power board (12) and the signal board (11) are interconnected via a plug-in system (11', 12'), and/or
wherein the power board and the signal board are arranged parallel to each other and/or components of the power electronics (12") are arranged on a side of the power board facing away from the signal board, and/or
wherein the electronic unit (10) and/or the signal board is/are set up for regulating exactly or at least one external apparatus (54'), in particular for regulating one or several damper adjustment valves (54'), and/or
wherein the electronic unit and/or the signal board is set up as a force modulator for one or several shock absorbers.

5. The motor-pump unit (1) according to any of the preceding claims,
wherein the electronic unit (10) and/or the signal board is/are connected to a pressure sensor.

6. The motor-pump unit (1) according to any of the preceding claims,
wherein the motor-pump unit comprises a motor-pump unit casing (1a), which preferably comprises a motor-pump casing (20a) and an electronic casing (10a), wherein the motor-pump unit casing and/or the electronic casing comprises a bus interface (13) and a supply voltage interface (14) and preferably an electric additional interface (15) for regulating the exactly or at least one external apparatus (54'), and/or
wherein the power board (12) is arranged closer to the motor-pump casing and/or a motor casing (21a) of the motor-pump casing than the signal board (11), and/or
wherein the components of the power electronics (12")
- are arranged on a side of the power board facing towards the motor casing and/or
- are in thermal and/or mechanical contact with the motor casing immediately and/or via thermally conductive agents, and/or
wherein the electronic casing and/or the power board and/or the signal board extends completely or substantially completely over the motor casing and/or is arranged laterally on the motor-pump casing and/or motor casing.

7. A motor-pump-unit axle set (2) comprising a motor-pump unit (1) according to any of claims 1 to 5, the motor-pump group (20) of which firms a first motor-pump group (20) with a first hydraulic pump (22) and a first electric motor (21),
wherein the motor-pump-unit axle set comprises a second motor-pump group (20), comprising a second hydraulic pump (22) and a second electric motor (21) for driving the second hydraulic pump, and
wherein the electronic unit (10) forms a common electronic unit for regulating the first and second motor-pump groups.

8. The motor-pump-unit axle set (2) according to claim 7,
wherein the electronic unit (10) and/or the signal board (11) is/are set up for regulating at least or exactly one or two external apparatuses (54'), in particular for regulating two or several damper adjustment valves (54'), and/or
wherein the electronic unit and/or the signal board is set up as a force modulator for two or more shock absorbers (54).

9. The motor-pump-unit axle set (2) according to claim 7 or 8,
wherein the motor-pump-unit axle set comprises a motor-pump-unit axle set casing (2a), which preferably comprises two motor-pump casings (20a) and an electronic casing (10a), and/or
wherein the motor-pump-unit axle set casing and/or the electronic casing comprises a bus interface (13) and a supply voltage interface (14) and preferably one or two electric additional interfaces (15) for regulating the exactly or at least one or two external apparatuses (54'), and/or
wherein the power board (12) is arranged closer to the motor-pump casings and/or motor casings (21a) of the motor-pump casings than the signal board (11), and/or
wherein the components of the power electronics (12")
- are arranged on a side of the power board facing towards the motor casings and/or
- are in thermal and/or mechanical contact with the motor casings immediately and/or via thermally conductive agents, and/or
wherein the motor-pump casings and/or their motor casings are arranged on a common axis, and/or
wherein the electronic casing and/or the power board and/or the signal board extends completely or substantially completely over both motor casings and/or is arranged laterally on the motor-pump casings and/or motor casings.

10. A construction kit comprising a motor-pump unit according to any of claims 1 to 6 or a motor-pump-unit axle set according to any of claims 7 to 9, wherein the power board forms a first power board which has a predetermined first high-voltage voltage level,
and the electric motor(s) form first electric motors, with a coil winding adapted to the first high-voltage voltage level, further comprising
- a second power board which has a predetermined second high-voltage voltage level different from the first one, and preferably
- a second electric motor for the or for each motor-pump group, which has a coil winding adapted to the predetermined second high-voltage voltage level, in particular with a coil winding that is different from the first electric motor.

11. The construction kit according to claim 10, wherein the first and second power boards have an identical circuit board layout and preferably have voltage levels of 400 V and 800 V.

12. A chassis axle (51) comprising a motor-pump-unit axle set (2) according to any of claims 7 to 9,
wherein the chassis axle is preferably pre-assembled and has two hydraulically regulatable shock absorbers (54), which are particularly preferably hydraulically connected respectively to the pumps (22) of the first and the second motor-pump group (20) of the motor-pump-unit axle set, and
wherein the shock absorbers have respectively exactly or at least one electrically regulatable damper adjustment valve (54'), which are regulated respectively by the motor-pump-unit axle set or the electronic unit (10) thereof, and/or
wherein the electronic unit and/or the signal board (11) is/are set up as a force modulator for the shock absorbers.

13. A chassis axle (51) comprising two motor-pump units (1) according to any of claims 1 to 6,
wherein the chassis axle is preferably pre-assembled and has two hydraulically regulatable shock absorbers (54), which are particularly preferably hydraulically connected respectively to the pumps (22) of the two motor-pump units (1), and
wherein the shock absorbers have respectively exactly or at least one electrically regulatable damper adjustment valve (54'), which are respectively regulated by one of the two motor-pump units or the electronic units (10) thereof, and/or
wherein the electronic unit and/or the signal board (11) of the motor-pump units are respectively set up as a force modulator for the respective shock absorber.

14. A chassis system (50) for a vehicle, comprising
a first chassis axle (51) according to either of claims 12 or 13,
a second chassis axle according to either of claims 12 or 13, and
a chassis control device (16) which is connected to the electronic units (10) of the motor-pump units (1) and/or the motor-pump-unit axle sets (2) via the bus interface (13).

## Revendications

1. Unité moteur-pompe (1) destinée à fournir de l'énergie hydraulique dans un système de châssis actif (50) d'un véhicule ayant un amortisseur réglable et commandé activement, comprenant
- un groupe moteur-pompe (20) comprenant une pompe hydraulique (22) et un moteur électrique (21) pour l'entraînement de la pompe hydraulique, et
- une unité électronique (10) pour la commande du groupe moteur-pompe,
cependant que la pompe hydraulique (22) est une pompe à engrenage,
**caractérisée en ce**
**que** l'unité électronique comporte une carte puissance (12) dotée d'une électronique de puissance et une carte de signalisation (11) réalisée séparément, et
la carte puissance (12) présente un niveau de tension haute tension et la carte de signalisation (11) présente un niveau de tension basse tension inférieur au niveau de tension haute tension,
cependant que le niveau de tension désigne la tension la plus haute apparaissant à la carte de circuit imprimé pendant le fonctionnement et/ou la tension maximale pour laquelle la carte de circuit imprimé est conçue.

2. Unité moteur-pompe (1) selon la revendication 1, **caractérisée en ce que** le niveau de tension haute tension s'élève à 48 V, 400 V ou 800 V et/ou le niveau de tension basse tension s'élève à 5 V, 12 V ou 24 V.

3. Unité moteur-pompe (1) selon la revendication 1 ou 2, **caractérisée en ce**
- **que** l'électronique de puissance comprend des transistors de puissance à commutation (12"), en particulier un pont B6 et/ou un convertisseur de tension du niveau de tension haute tension au niveau de tension basse tension, et/ou une interface de tension d'alimentation pour l'alimentation en tension de la carte de signalisation et/ou une interface de tension d'alimentation (haute tension), et/ou
- **que** la carte de signalisation (11) comprend une CPU (11"), un microprocesseur et/ou un FPGA et/ou une interface de bus (13) et/ou une interface de tension d'alimentation pour l'alimentation en tension de la carte de signalisation et/ou une séparation galvanique ou des éléments de séparation galvanique entre l'interface de tension d'alimentation d'une part et l'interface de bus d'autre part.

4. Unité moteur-pompe (1) selon une des revendications précédentes,
cependant que la carte puissance (12) et la carte de signalisation (11) sont reliées l'une à l'autre par l'intermédiaire d'un système d'enfichage (11', 12'), et/ou
cependant que la carte puissance et la carte de signalisation sont agencées parallèlement l'une à l'autre et/ou des composants de l'électronique de puissance (12") sont agencés sur un côté de la carte puissance tourné à l'opposé de la carte de signalisation, et/ou
cependant que l'unité électronique (10) et/ou la carte de signalisation sont conçues pour la commande d'exactement ou au moins un dispositif externe (54'), en particulier pour la commande d'une ou de plusieurs soupapes de réglage d'amortisseur (54'), et/ou
cependant que l'unité électronique et/ou la carte de signalisation sont conçues en tant que régulateur de force pour un ou plusieurs amortisseurs.

5. Unité moteur-pompe (1) selon une des revendications précédentes,
cependant que l'unité électronique (10) et/ou la carte de signalisation est/sont reliée(s) à un capteur de pression.

6. Unité moteur-pompe (1) selon une des revendications précédentes,
cependant que l'unité moteur-pompe comprend un boîtier d'unité moteur-pompe (1a) qui comprend de préférence un boîtier de moteur-pompe (20a) et un boîtier d'électronique (10a), cependant que le boîtier d'unité moteur-pompe et/ou le boîtier d'électronique comprend une interface de bus (13) et une interface de tension d'alimentation (14) et de préférence une interface électrique supplémentaire (15) pour la commande du exactement un ou au moins un dispositif externe (54'), et/ou
cependant que la carte puissance (12) est agencée plus près du boîtier de moteur-pompe et/ou d'un boîtier de moteur (21a) du boîtier de moteur-pompe que la carte de signalisation (11), et/ou cependant que les composants de l'électronique de puissance (12")
- sont agencés sur un côté de la carte puissance tourné vers le boîtier de moteur et/ou
- sont en contact thermique et/ou mécanique avec le boîtier de moteur directement et/ou par l'intermédiaire d'agents thermoconducteurs, et/ou
cependant que le boîtier d'électronique et/ou la carte puissance et/ou la carte de signalisation s'étend entièrement ou essentiellement entièrement sur le boîtier de moteur et/ou est agencé(e) latéralement sur le boîtier de moteur-pompe et/ou boîtier de moteur.

7. Ensemble d'essieux d'unité moteur-pompe (2) comprenant une unité moteur-pompe (1) selon une des revendications de 1 à 5, dont le groupe moteur-pompe (20) constitue un premier groupe moteur-pompe (20) ayant une première pompe hydraulique (22) et un premier moteur électrique (21),
cependant que l'ensemble d'essieux d'unité moteur-pompe comprend un deuxième groupe moteur-pompe (20) ayant une deuxième pompe hydraulique (22) et un deuxième moteur électrique (21) pour l'entraînement de la deuxième pompe hydraulique, et
cependant que l'unité électronique (10) constitue une unité électronique commune pour l'entraînement du premier et deuxième groupe moteur-pompe.

8. Ensemble d'essieux d'unité moteur-pompe (2) selon la revendication 7,
cependant que l'unité électronique (10) et/ou la carte de signalisation (11) est/sont conçue(s) pour la la commande d'au moins ou d'exactement un ou deux dispositifs externes (54'), en particulier pour la commande de deux ou plusieurs soupapes de réglage d'amortisseur (54'), et/ou
cependant que l'unité électronique et/ou la carte de signalisation est conçue en tant que régulateur de force pour deux ou plusieurs amortisseurs (54).

9. Ensemble d'essieux d'unité moteur-pompe (2) selon la revendication 7 ou 8,
cependant que l'ensemble d'essieux d'unité moteur-pompe comprend un boîtier d'ensemble d'essieux d'unité moteur-pompe (2a) qui comprend de préférence deux boîtiers de moteur-pompe (20a) et un boîtier d'électronique (10a), et/ou
cependant que le boîtier d'ensemble d'essieux d'unité moteur-pompe et/ou le boîtier d'électronique comprend une interface de bus (13) et une interface de tension d'alimentation (14) et de préférence une ou deux interfaces électriques supplémentaires (15) pour la commande des exactement ou au moins un ou deux dispositifs externes (54'), et/ou
cependant que la carte puissance (12) est agencée plus près des boîtiers de moteur-pompe et/ou des boîtiers de moteur (21a) du boîtier de moteur-pompe que la carte de signalisation (11), et/ou cependant que les composants de l'électronique de puissance (12")
- sont agencés sur un côté de la carte puissance tourné vers les boîtiers de moteur et/ou
- sont en contact thermique et/ou mécanique avec les boîtiers de moteur directement et/ou par l'intermédiaire d'agents thermoconducteurs, et/ou
cependant que les boîtiers de moteur-pompe et/ou leurs boîtiers de moteur sont agencés sur un axe commun, et/ou
cependant que le boîtier d'électronique et/ou la carte puissance et/ou la carte de signalisation s'étend entièrement ou essentiellement entièrement sur les deux boîtier de moteur et/ou est agencé(e) latéralement sur les boîtiers de moteur-pompe et/ou boîtiers de moteur.

10. Kit comprenant une unité moteur-pompe ou un jeu d'essieux selon une des revendications de 1 à 6 ou un ensemble d'essieux d'unité moteur-pompe selon une des revendications de 7 à 9,
cependant que la carte puissance constitue une première carte puissance qui présente un premier niveau de tension haute tension prédéterminé,
et le ou les moteurs électriques constituent des premiers moteurs électriques, avec un enroulement de bobine adapté au premier niveau de tension haute tension, comprenant en outre
- une deuxième carte puissance qui présente un deuxième niveau de tension haute tension prédéterminé différent du premier, et de préférence
- un deuxième moteur électrique pour le ou chaque groupe moteur-pompe qui a un enroulement de bobine adapté au deuxième niveau de tension haute tension prédéterminé, en particulier ayant un enroulement de bobine différent de celui du premier moteur électrique.

11. Kit selon la revendication 10, cependant que la première et deuxième carte puissance présentent une disposition identique de platine et présentent de préférence des niveaux de tension situés entre 400 V et 800 V.

12. Essieu de châssis (51) comprenant un ensemble d'essieux d'unité moteur-pompe (2) selon une des revendications de 7 à 9,
cependant que l'essieu de châssis est de préférence pré-assemblé et comporte deux amortisseurs (54) pouvant être commandés hydrauliquement, lesquels, particulièrement de préférence, sont respectivement reliés aux pompes (22) du premier et deuxième groupe moteur-pompe (20) de l'ensemble d'essieux d'unité moteur-pompe, et
cependant que les amortisseurs comportent respectivement exactement ou au moins une soupape de réglage d'amortisseur (54') pouvant être commandée électriquement, lesquelles sont respectivement commandées par l'ensemble d'essieux d'unité moteur-pompe ou son unité électronique (10), et/ou cependant que l'unité électronique et/ou la carte de signalisation (11) est/sont conçue(s) en tant que régulateur de force pour les amortisseurs.

13. Essieu de châssis (51) comprenant deux unités moteur-pompe (1) selon une des revendications de 1 à 6,
cependant que l'essieu de châssis est de préférence pré-assemblé et comporte deux amortisseurs (54) pouvant être commandés hydrauliquement, lesquels, particulièrement de préférence, sont respectivement reliés hydrauliquement aux pompes (22) des deux unités moteur-pompe (1), et
cependant que les amortisseurs comportent respectivement exactement ou au moins une soupape de réglage d'amortisseur (54') pouvant être commandée électriquement, lesquelles sont respectivement commandées par une des unités moteur-pompe ou leurs unités électroniques (10), et/ou
cependant que l'unité électronique et/ou la carte de signalisation (11) des unités moteur-pompe sont respectivement conçue(s) en tant que régulateur de force pour l'amortisseur respectif.

14. Système de châssis (50) pour un véhicule, comprenant
un premier essieu de châssis (51) selon une des revendications 12 ou 13,
un deuxième essieu de châssis selon une des revendications 12 ou 13, ainsi que
un appareil de commande de châssis (16) qui est relié aux unités électroniques (10) des unités moteur-pompe (1) et/ou ensembles d'essieux d'unité moteur-pompe (2) par l'intermédiaire de l'interface de bus (13).
